# EUROPEAN PATENT APPLICATION

(11) **EP 1 320 035 A1**
(43) Date of publication of application: **18.06.2003**
(21) Application number: 01460077.9
(22) Date of filing: 11.12.2001
(51) Int. Cl.: G06F 12/08

(54) **Storage device cache management**

(71) Applicant: Thomson Licensing S.A., 92100 Boulogne (FR)
(72) Inventor: Chapel, Claude, 92648 Boulogne Cedex (FR); Guillemot, Jean-Charles, 92648 Boulogne Cedex (FR); Leroux, Jean, 92648 Boulogne Cedex (FR)
(74) Representative: Browaeys, Jean-Philippe

(57) **Abstract**

The invention concerns a storage device (2, 11) including a storage medium (8, 12, 25) and a cache memory (13, 26), said storage medium (8, 12, 25) being intended to be accessed in read mode or in write mode, through the cache memory (13, 26), by a host device (1, 15, 21) being associated with file system management means (6), characterized in that the cache memory (13, 26) is loaded upon control of the file system management means (6).

Application to multimedia terminals and especially to digital television receivers or set-top box.

## Description

The invention concerns a storage device including a storage medium and a cache memory, said storage medium being intended to be accessed in read mode or in write mode, through the cache memory, by a host device being associated with file system management means

Most of storage devices are provided with a cache memory in order to enhance the drive performances.
The management of cache memory in storage devices is a great challenge to improve performances of systems, and particularly when sustained bit rate must be kept. This is particularly true when storage devices are used for storing video data.
In known systems, the cache memory included in all storage devices is managed by the controller or firmware associated with the storage medium itself. Such a firmware controls the cache memory accesses and the storage medium accesses and cache prefetch is based on the last accesses done by the host device.
Using cache prefetch based on the last accesses done by the host device reduces considerably the chances of a cache hit as the storage medium is not aware of the data organization on the storage medium. Namely, the cache prefetch in known systems is done using statistics on the last accesses done by the host. In order to get a good proportion of cache hits, the designers are thus obliged to provide a lot of cache memory to fit with the statistics. Increasing the size of cache memory to increase the cache-hit probability is expensive and not suitable especially in embedded devices.

Moreover, during write access to a storage medium, and especially when data to be stored are continuous bit streams, such as for instance isochronous data, it is often necessary to provide a high capacity buffer memory at the input of the storage medium to sustain high bit rate. Using such a buffer memory increases considerably the cost of devices.

The invention proposes a storage device including a storage medium and a cache memory, said storage medium being intended to be accessed in read mode or in write mode, through the cache memory, by a host device being associated with file system management means.
According to the invention the cache memory is loaded upon control of the file system management means.

The inventors have found particularly interesting to implement a cache prefetch command that would indicate to the firmware managing the storage medium to realize cache prefetching at a given address. In case of read mode, if the requested file comprises video data, the video data can be stored on several sectors. The file system is aware of this organization or fragmentation and thus can provide the address of the next sector where the remainder of the file is located. Thus, the size of the cache memory may be decreased without reducing the probability of cache hits.
This cache prefetch is a kind of cognitive prefetch by opposition with the statistic prefetch made by traditional prefetch controlled by the storage medium and not by the file system and based on the most recent access and not on the real location of data on the disk.

According to an embodiment of the invention, the file system management means associated with the host device control cache memory prefetch during the accesses in read mode.
In known systems, the cache prefetch is managed by the firmware associated with the storage medium and no external action is defined. This embodiment enables a file system manager to act on the cache loading in order to modify the behaviour of the cache.

According to an embodiment of the invention, during read access, the file system management means contains means to send prefetch commands to the cache memory in order to download data requested by the host device from the storage medium to the cache memory.

According to an embodiment of the invention, the prefetch commands contain means to indicate the addresses on the storage medium of the next data to be prefetched in the cache memory.

According to an embodiment of the invention, the storage device comprises an interface compliant with the Serial Advanced Technology Attachment standard or with the Parallel Advanced Technology Attachment standard.
The Serial Advanced Technology Attachment standard (SATA) interface brings major benefits, as being a high level protocol, especially compared with the Parallel Advanced Technology Attachment (PATA) interface.

According to an embodiment of the invention, the storage device comprises encapsulation means for encapsulating the prefetch commands in a Frame Information Structure field defined in the Serial Advanced Technology Attachment interface.
The Frame Information Structures defined in the context of SATA. In order to be compliant with the SATA standard, the inventors have found that it would be particularly suitable to encapsulate the API in the transport layer and therefore propose to use a FIS for sending the remote procedures calls.

According to an embodiment of the invention, during access in write mode, the file system management means contain means to send a write cache command to the storage medium in order that data to be stored on the storage medium are first stored on the cache memory and transferred from the cache memory to the storage medium when the cache memory filling in has reached a predetermined level.

The invention concerns also a multimedia device, preferentially a digital television decoder, characterized in that it includes a storage device according to any of the embodiments of the invention.

Despite a common use of this cache prefetch based on statistics, the inventors have found that it could be particularly interesting to base cache prefetch on the real access to be done.

Other characteristics and advantages of the invention will appear through the description of a non-limiting embodiment of the invention, which will be illustrated, with the help of the enclosed drawings among which:
- figure 1 represents a block diagram of a system representing an embodiment of the invention,
- figure 2 represents an embodiment of the cache prefetch by the file system,
- figure 3 represents an embodiment of the data transfer from the storage medium to the cache memory,
- figure 4 represents an embodiment of the data transfer from the cache memory to the host device,
- figure 5 represents a block diagram of a system representing another embodiment of the invention,
- figure 6 represents an embodiment of the cache write by a host device,
- figure 7 represents an embodiment of the data flow implemented during the write cache command.

The present embodiment is based on interface means compliant with the Serial Advanced Technology Attachment (SATA) standard defined in the document "serial ATA, revision 1.0, 29 August 2001". SATA transports the ATA protocol. It is also related to the storage of video data on a recording medium and in the present embodiment, the storage medium is a hard disk but could be of any other type. The invention is of course not limited to video data type but also to audio or any informative data. Video data type is taken as an embodiment as video data request high bandwidth and a sustained bit rate

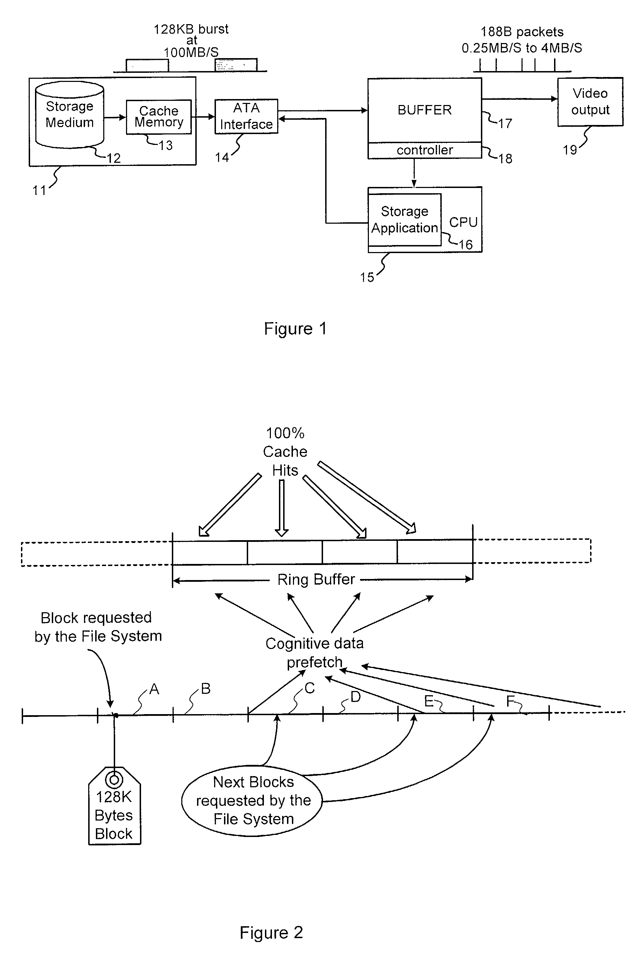

Figure 1 represents a system that implements the invention.
A host device 15 including a storage application 16 is linked to a SATA interface 14, which is linked to a storage device 11 and a buffer 17 associated with a controller 18. The SATA interface could also be replaced by a parallel ATA interface, or any other interface suitable for accessing a storage device. The buffer 17 is linked to a video output 19. The video output 19 can be an external connection to a TV set or any other mean that can receive or process video data type.

The storage device 11 comprises at least a hard disk 12 and a cache memory 13. The host CPU accesses to the hard disk 12 through the SATA interface 14.

The host device 15 is a processor-based device namely able to drive a storage application 16. The storage application 16 being a software program, for instance, loaded in a memory associated with the processor.
The host device, or more precisely the file system running on the host processor is aware of the data location on the hard disk 12. The file system management means send commands through the ATA interface in order to control the cache memory 13.
A cache prefetch and a cache write commands are defined as indicated below.
The command is implemented using a sub-command of the ATA command "Set Feature", which code is EF (in hexadecimal).
This sub-command code is 83H and is defined ccording to the following table.

| Register | 7 | 6 | 5 | 4 | 3 | 2 | 1 | 0 |
|---|---|---|---|---|---|---|---|---|
| Features | 83h | | | | | | | |
| Sector Count | Cache Segment size | | | | | | | |
| Sector Number | Cache Segment number | | | | | | | |
| Cylinder Low | na | na | na | na | na | na | na | W/R |
| Cylinder High | na | | | | | | | |
| Device/Head | | | | DEV | | | | |
| Command | EFh | | | | | | | |

Sector Count register
   Cache Segment Size: size of the cache segment here defined.
Sector Number register
   Cache Segment number: order number of the cache segment
Cylinder Low register - bit (0)
   W/R: set to 0 for a write cache segment, set to for a read cache segment
Device/Head register - bit (4)
   DEV shall indicate the selected device

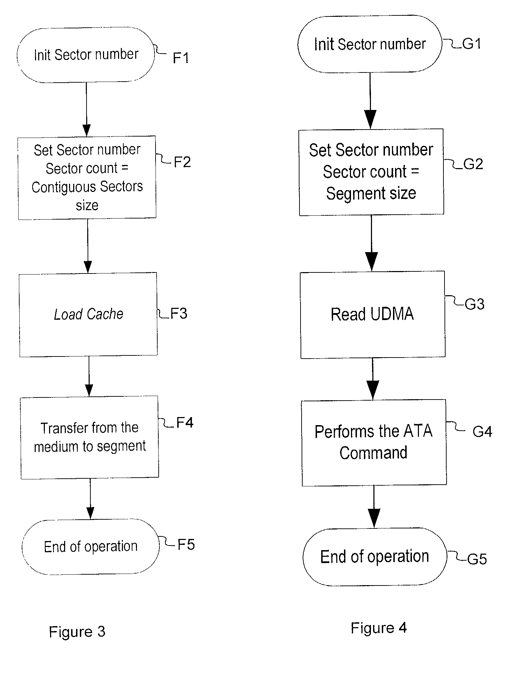

Figure 2 represents the cache prefetch according to an embodiment of the invention.
The cache prefetch is managed by the file system.
The file system is usually located close to the host device, that is to say before the SATA interface as shown on figure 1 but can also be located after the SATA interface as shown on figure 3.
The file system is in charge of managing the organization of files on the hard disk and thus knows the location of data on the hard disk.
In one embodiment of the invention, the file system is a multimedia file system particularly suitable for the common storage of video data and informative data.
Such a multimedia file system dedicated for storing on the same recording medium video data and informative data features a first type of storage unit for storing audio and/or video streams and a second type of storage unit for storing non-stream data, wherein the size of the first storage unit is a multiple of the size of the second storage unit. A unit of the first type is allocated either for stream storage or is split into a plurality of units of the second type, for storage of non-stream data.
In one embodiment of this file system, there is only one directory tree for both types of storage units and both types of files.
The storage device 11 can store informative data (non-stream data) or audio/video data (stream data) in an efficient manner, avoiding a fragmentation of the hard disk 12, without defining a fixed area for informative data and a fixed area for audio/video data.
Advantageously, a unit of the first type split into a plurality of units of the second type can be, upon availability of all these units of the second type and according to the type of data to be stored, no more split into a plurality of units of a second type.
The bandwidth being function of the size of a data burst transfer, less time is used for seeking the hard disk drive sectors, higher the bandwidth is. Thus, the multimedia file system by managing the hard disk 12 according to the type of data to be stored limits the sectors search and therefore reduces the access time thus increases the sustained bit rate.

The hard disk can then be in accordance with the type of data to be stored and its occupation can be optimised. This may improve the fragmentation of the hard disk 12 when there are only big size files to store. These ones are stored in a big block, whereas when there are a lot of small size files to store, big size blocks are split in small size blocks as long as there is a need.
Using a file system such as the multimedia file system can improve greatly the access time to the data, as the file fragmentation can be considerably decreased.

Preferably, at least one first data structure indicates at least for each first type unit whether this unit is free or not, and whether this unit is divided in a plurality of second type storage units or not.

When the host wants to read data from the hard disk 12, it sends a prefetch command to the hard disk 12. The prefetch command is defined as a new command supported by the ATA protocol.
The prefetch command gives instructions to the storage device 11 to load into the cache memory 13 the data which are the next to be read by the storage application 16. Namely, when the storage application stores video data, these video data request several disk sectors to be stored as it usually represents a huge amount of data. As shown on figure 2, these data are respectively stored on sectors A, C, D, E and F. With conventional prefetch (look ahead prefetch), based on statistics, the cache memory would load sectors A, B, C, D, E and thus would not provide a 100% cache hit. The embodiment of the invention provides a 100% cache hit as the cache prefetch command instruct the cache memory 13 to load from the hard disk the next data to be read effectively.
Moreover, the use of a multimedia file system as described above, increases the efficiency of the cache prefetch as it optimizes the hard disk use.
Figure 3 represents an embodiment of the data transfer from the storage medium to the cache memory.
On step F1, the sector number is initialised, it gives the location of the data on the hard disk medium. On step F2, the sector number registers and the sector count register are set by the host. The sector count value has the same vamue as the target cache segment size. On step F3, the cache prefetch or load cache command is issued by the host to ask to the device to transfer the data from the storage medium to the cache memory. On step F4, the data are transferred from the hard disk medium to the cache memory.

Figure 4 represents an embodiment of the data transfer from the cache memory to the host device.
On step G1, the sector number is initialised. The value is the same as the first sector number of the source cache segment. This condition insures the cache hit as expected by the cognitive data prefetch. On step G2, the sector number registers and the sector count register are set by the The sector count value has the same value as the source cache segment size.
On step G3, the standard ATA command Read UDMA is issued by the host. The accesses are instantaneous as the data are already present in the cache memory. On step G4, the ATA command is performed and the data are transferred from the storage device to the host device through the ATA interface.

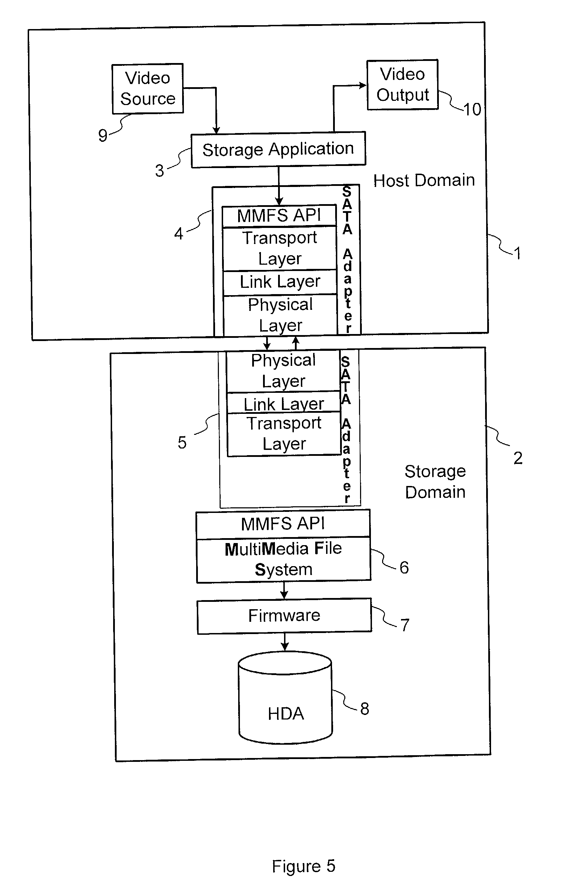

Figure 5 represents another system where an embodiment of the invention can be implemented.

Figure 5 represents a host device 1 and a storage device 2 according to an embodiment of the invention and gives a functional description of the host device and of the storage device. The host device comprises a storage application 3, an interface 4, a video source 9 and a video output 10.

The storage device 2 comprises an interface 5, a multimedia file system 6, a firmware program 7 and a hard disk assembly 8. The hard disk assembly 8 includes at least the storage medium, being a hard disk in the given embodiment, and the cache memory.

For designers of embedded systems, it is very convenient to be provided with a storage device including a file system when the interface enables a host to access the storage means by sending remote call procedures to the file system means. So, the storage device is delivered as an autonomous entity controlled through a simple interface by passing procedure calls and thus does not request extra work for the designer. This enables the designers to get the best of a hard disk drive without any expertise in the domain.
Preferentially, the interface includes an Application Programming Interface, which can make easier the control of the storage device.
The storage device 2 is provided as a stand-alone and highly integrated storage device where all the software that manages the files and the hard disk assembly controller is embedded.
The hard disk medium 8 is intended to store video data from the video source 9 or any other data provided to the storage application 3 called non video data or informative data. The video source 9 can be of any type such as a broadcast program for instance and can be a stream coded according to MPEG-2 or MPEG-4 standard. The hard disk is also intended to be read by the storage application in order to provide data to the video output 10. The video output 10 can be an external connection to a TV set or any other mean that can receive or process video data type.
The host device 1 can either read or store data (informative data or video data) on the hard disk drive 8. It can read data on the hard disk drive 8 requested by the video output 10 or send data to the hard disk drive 8 coming from the video source 9.

When the host device 1 wants to store data on the hard disk drive 8, the storage application 3 sends call commands to the multimedia file system 6 of the storage device 2 via the interface 4 on the host device 1 and the interface 5 of the storage device 2.

The storage application 3 receives this video stream from a video source 9. The storage application has to store the video stream on the hard disk drive 8.

The interface 4 and the interface 5 are of the same type in order to enable the communication between the host device and the storage device. As mentioned above, in the present embodiment, these interfaces are compliant with the Serial Advanced Technology Attachment (SATA) standard.
The SATA interface defines three layers: physical, link and transport layers.

The physical layer is a serial type interface. The SATA interface can provide a high integration and high-speed interface for the consumer market. Other interface types such as for instance the Parallel Advanced Technology Attachment (PATA) can also provide a high-speed interface but provides less integration facilities than the SATA interface. SATA interface is designed to be transparent with the PATA interface

In another embodiment of the invention, several types of interface could be implemented on the storage device and especially both PATA and SATA, as SATA is software transparent to PATA.

The link layer encapsulates and transmits frames.
The link layer transmits and receives frames, transmits primitives based on control signals from the transport layer, and receives primitives from the physical layer, which are converted to control signals to the transport layer. The link layer needs not be cognizant of the content of frames.

The transport layer constructs Frame Information Structures (FIS) for transmission and decomposes received FIS. Host and storage device transport layers differ in that the source of the FIS content differs.

In the given embodiment, the host device 1 and the storage device 2 are physically independent.

According to a variant of the embodiment, the storage device 2 and the host device 1 can be for instance on the same printed circuit board just physically separated by a connector.

The interface 4 and the interface 5 are interface means enabling the transfer of remote call procedures from the host device 1 to the storage device 2.

The interface 4 includes an API standing for Application Programming Interface. The API enables the procedure calls between the host device 1 and the storage device 2.
In order to be compliant with the SATA standard, the inventors have found that it would be particularly suitable to encapsulate the API in the transport layer.
The API is defined as a new FIS category. This FIS provides a structure description that the API procedure calls.

The interface 5 on the storage device 1 decomposes the received FIS.
Namely, it extracts the API from the API FIS in order to transmit the API to the multimedia file system 6.

The multimedia file system 6 is controlled through the API, which mainly enables the transfer of procedure calls between the host device 1 and the storage device 2.
The multimedia file system 6 accesses the hard disk drive through a firmware module 7. The firmware module 7 manages the low level accesses to the hard disk 8.

The firmware module 7, the multimedia file system 6 and the hard disk drive 8 are very close and can interact.
The hard disk drive 8 contains, as standard hard disk drives, a cache memory. Using a cache memory is a mean to counterbalance the hard disk drive 8 lack of sustained bandwidth mainly during multiple-access.

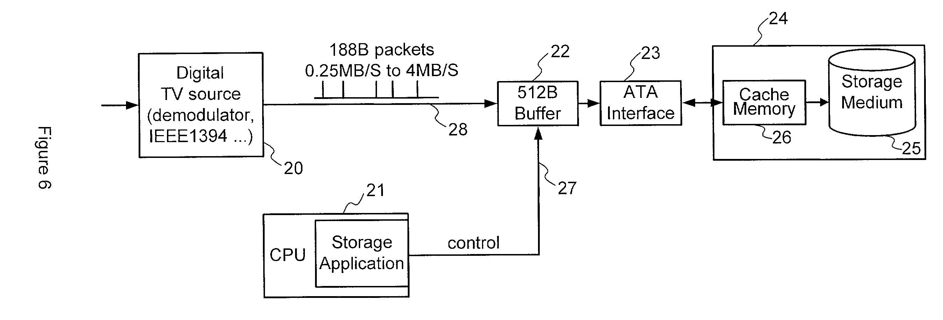

Figure 6 represents an embodiment of the invention illustrating the write cache command.
A digital TV source 20 is connected to a buffer 22 via a link 28. Buffer 22 is connected to a storage device 24 via a SATA interface 23. The storage device 24 comprises a hard disk 26 and a cache memory 25. Link 27 is a data bus connecting the host device 21 and the buffer memory 22.
In this embodiment, the transfer mode is SATA UDMA (standing for "ultra direct mode access") mode 5 at 100MB/s and thus can sustain AV application.

The digital TV source provides video data comprising packets including each 188 Bytes, at a bit rate of 0.25MB/s (Mega bytes per second) to 4 MB/s.
The Host device controls the SATA interface by sending commands as described for instance on figure 1.

When video data come from the digital TV source 20 at a high bit rate, video data are transferred to the SATA interface through buffer 22.
A small buffer 22 (512 bytes) may be needed to adjust the bit rate between the incoming flow and cache write.
Thanks to a write cache command, the host device can enable the direct transfer of video data from the digital TV source 20 to the hard disk 26.
The host sets the sector number, the sector count in order to be compliant with the SATA procedure.
The host writes to the cache memory one 512Bytes block at a time by using the write cache command. When 256 blocks are written, 128KB of data are written on the hard disk at the location previously set by the host device 21. This transfer, from the cache memory 25 to the hard disk 26 is automatic and triggered by the filling level of the cache memory 25.

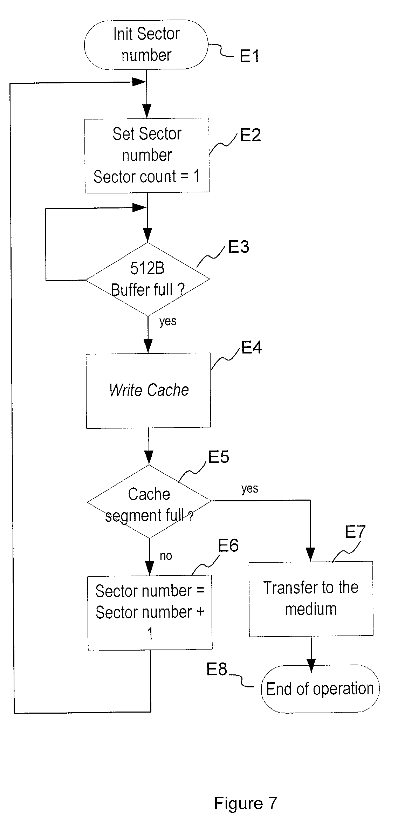

Figure 7 represents an embodiment of the data flow implemented during the write cache command.
In step E1, the sector number where the data are to be stored on the hard disk is initialised by the file system management means.
Then, on step E2, the command is sent to the firmware to indicate to the firmware the sector number where to store the data. A counter called sector count is also set. This avoids indicating the sector number at each transfer. The sector number for the following blocks of data will be the number of the first sector to which is added the value of the sector count.
The data are then transferred to the buffer (for instance buffer 22 on figure 4) until the buffer is full. When the buffer is full, the file system sends to the firmware a write cache command, step E4. The write cache command indicates the data transfer to the cache memory. When the cache segment is full or when it has reached a predetermined level, the data are transferred to the storage medium on step E7. For instance, when 256 blocks are written, 128KB of data are written on the storage medium at the location previously set by the file system. This operation can be automatic, triggered by the filling level of the cache memory.
If the amount of data loaded in the cache is greater than the size of a sector, the sector number is also incremented, step E6.
The write cache command allows the host to write data into the cache memory without writing the data on the storage medium itself.
Thanks to the high speed of the ATA protocol, the data transfers between the host and the hard disk drive may be very short.

## Claims

1. Storage device (2, 11) including a storage medium (8, 12, 25) and a cache memory (13, 26), said storage medium (8, 12, 25) being intended to be accessed in read mode or in write mode, through the cache memory (13, 26), by a host device (1, 15, 21) being associated with file system management means (6), **characterized in that** the cache memory (13, 26) is loaded upon control of the file system management means (6).

2. Storage device according to claim 1 **characterized in that** the file system management means (6) associated with the host device (1, 15, 21) control cache memory prefetch during the accesses in read mode.

3. Storage device according to claim 2 **characterized in that**, during read access, the file system management means (6) contains means to send prefetch commands to the cache memory (13, 26) in order to download data requested by the host device (1, 15, 21) from the storage medium (8, 12, 25) to the cache memory (13, 26).

4. Storage device according to any of claims 2 or 3 **characterized in that** the prefetch commands contain means to indicate the addresses on the storage medium (8, 12, 25) of the next data to be prefetched in the cache memory (13, 26).

5. Storage device according to any of claims 1 to 4 **characterized in that** it comprises an interface (4, 5, 14, 23) compliant with the Serial Advanced Technology Attachment standard or with the Parallel Advanced Technology Attachment standard.

6. Storage device according to any of claims 1 to 5 **characterized in that** it comprises encapsulation means for encapsulating the prefetch commands in a Frame Information Structure field defined in the Serial Advanced Technology Attachment interface.

7. Storage device according to claim 1 **characterized in that**, during access in write mode, the file system management means (6) contain means to send a write cache command to the storage medium (8, 12, 25) in order that data to be stored on the storage medium (8, 12, 25) are first stored on the cache memory (13, 26) and transferred from the cache memory (13, 26) to the storage medium (8, 12, 25) when the cache memory (13, 26) filling in has reached a predetermined level.

8. Multimedia device, preferentially a digital television decoder, **characterized in that** it includes a storage device (2, 11) according to any of claims 1 to 7.
